# EUROPÄISCHE PATENTSCHRIFT

(11) **EP 1 552 172 B1**
(45) Veröffentlichungstag und Bekanntmachung des Hinweises auf die Patenterteilung: **02.01.2008**
(21) Anmeldenummer: 03808711.0
(22) Anmeldetag: 08.10.2003
(51) Int. Cl.: F16C 33/20, B32B 7/00, B32B 15/00

(54) **GLEITLAGERMATERIAL**
SLIDING BEARING MATERIAL
MATERIAU DE PALIER A GLISSEMENT

(30) Priorität: 14.10.2002 DE 10247830
(43) Veröffentlichungstag der Anmeldung: 13.07.2005
(73) Patentinhaber: Saint-Gobain Performance Plastics Pampus Gmbh, 47877 Willich (DE)
(72) Erfinder: WÖLKI, Peter, 41189 Mönchengladbach (DE); HARIG, Friedrich, 47877 Willich (DE); HAARDT, Heinz, 41352 Korschenbroich (DE)
(74) Vertreter: Cohausz & Florack
(86) Internationale Anmeldenummer: PCT/EP2003/011095
(87) Internationale Veröffentlichungsnummer: WO 2004/036066

(56) Entgegenhaltungen:
- US-A- 5 229 198
- US-A- 5 686 176
- DATABASE WPI Section Ch, Week 200239 Derwent Publications Ltd., London, GB; Class A14, AN 2002-354747 XP002284799 & JP 2001 323115 A (OILESS IND CO LTD) 20. November 2001 (2001-11-20)

## Beschreibung

Die Erfindung betrifft ein Verbundmaterial zum Einsatz in Gleitlagern, umfassend einen metallischen Träger und mindestens ein Verstärkungsmaterial mit offener Struktur, wobei der Träger und das Verstärkungsmaterial durch eine metallische Verbindung miteinander verbunden sind und wobei auf dem Verstärkungsmaterial als weitere Schicht eine Laufschicht vorgesehen ist.

Gleitlagerverbundmaterialien aus einem metallischen Träger, einem Verstärkungsmaterial und einer Laufschicht aus Kunststoff sind allgemein bekannt. Die Verbindung von Metallträger und Verstärkungsmaterial erfolgt dabei in der Regel durch Laminieren unter Verwendung eines geeigneten Klebers wie Perfluoralkoxypolymer (PFA).

Das Verstärkungsmaterial in bekannten Gleitlagerverbundmaterialien besteht in der Regel aus Metall und kann beispielsweise ein Drahtgewebe, Streckmetall oder ein Lochblech sein.

Die Laufschicht in bekannten Gleitlagern besteht in der Regel aus Kunststoffen, die gute Gleiteigenschaften haben und gleichzeitig hohen mechanischen Belastungen standhalten und besonders temperaturbeständig sind wie Polytetrafluorethylen (PTFE), Tetrafluorethylen-Perfluorpropylen (FEP) oder Polyether-Etherketon (PEEK).

Verstärkungsmaterial durch eine metallische Verbindung miteinander verbunden sind. So ist beispielsweise in der US 5 229 198 ein Gleitlagerverbundmaterial aus einem metallischen Träger und einem mit Polytetrafluorethylen (PTFE) beschichteten Drahtgewebe beschrieben, das durch Schweißen mit dem Träger verbunden ist. Auf diese Weise hergestellte Verbundmaterialien zeichnen sich durch eine spielfreie Lagerung und eine verbesserte Tragfähigkeit des Lagers aus. Außerdem ist ein solches Verbundmaterial im Vergleich zu laminierten Materialien besser umformbar.

Nachteilig beim Einsatz der bekannten, hochbelastbaren und temperaturbeständigen Fluorkunststoffe wie PTFE in der Laufschicht von Gleitlagern sind deren hohe Herstellungskosten. So ist beispielsweise PTFE nur durch relativ aufwendiges Sintern formbar. Ferner besteht Bedarf an alternativen umweltverträglichen Materialien zu PTFE.

Aus der US 5686176 ist ein Verbundmaterial zum Einsatz in Gleitlagern bekannt, umfassend eine Matrix aus einem thermoplastischen Polymer, das zur Verbesserung von Abriebfestigkeit und Tragfähigkeit Kalk als Additiv enthält. Als thermoplastisches Polymer wird vorzugsweise PTFE gegebenenfalls in Verbindung mit einem weiteren thermoplastischen Material wie beispielsweise Polyethylen eingesetzt.

Der Erfindung liegt unter anderem die Aufgabe zugrunde, ein Verbundmaterial zum Einsatz in Gleitlagern zu schaffen, welches einerseits kostengünstig und umweltfreundlich hergestellt und entsorgt werden kann und das andererseits mechanisch belastbar und temperaturbeständig ist. Weitere Aufgaben der Erfindung ergeben sich aus der nachfolgenden Beschreibung und den Beispielen.

Diese und weitere Aufgaben werden erfindungsgemäß durch ein Verbundmaterial zum Einsatz in Gleitlagern gelöst, bei dem die Laufschicht Polyethylen in einer Menge von 90 bis 100 Gew.% enthält.

Vorteilhafte Ausgestaltungen des erfindungsgemäßen Verbundmaterials, ein entsprechendes Verfahren zu seiner Herstellung sowie eine besondere Verwendung davon sind in den Unteransprüchen beschrieben. bei dem die Laufschicht eine Schicht auf Basis von Polyethylen ist.

Vorteilhafte Ausgestaltungen des erfindungsgemäßen Verbundmaterials, ein entsprechendes Verfahren zu seiner Herstellung sowie eine besondere Verwendung davon sind in den Unteransprüchen beschrieben.

Überraschend wurde festgestellt, dass Verbundmaterialien mit einer Laufschicht auf Basis von Polyethylen (PE) äußerst belastbar und temperaturbeständig sind, unter der Voraussetzung, dass Metallträger und Verstärkungsmaterial über eine metallische Verbindung miteinander verbunden sind. Gleichzeitig ist Polyethylen einfach und kostengünstig herzustellen, wobei die Herstellung und auch die Entsorgung keine Belastung für die Umwelt darstellen.

Das in der Laufschicht des erfindungsgemäßen Verbundmaterials enthaltene Polyethylen ist ein thermoplastischer Kunststoff, der eine sehr hohe Verschleißfestigkeit aufweist und gute Gleiteigenschaften besitzt.

Im Vergleich zu den bekannten Kunststoffen, die bisher bei der Herstellung von Verbundmaterialien für Gleitlager als Laufschicht aufgebracht wurden (PTFE, FEP oder PEEK), ist Polyethylen nur in einem deutlich kleineren Temperaturbereich dauerwärmebeständig, nämlich in einem Bereich von -150°C bis maximal +90°C. Zum Vergleich, PTFE ist kältebeständig bis -200°C und dauerwärmebeständig bis +260°C. Aus diesem Grund wurde bisher nicht in Erwägung gezogen, das im Vergleich relativ temperaturunbeständige Polyethylen als Material für eine Laufschicht bei Gleitlagern zu verwenden.

Jedoch hat sich erwiesen, dass diese als negativ angesehenen Eigenschaften keinen Nachteil darstellen, wenn man den Träger mit dem Verstärkungsmaterial auf metallische Weise verbindet. Aufgrund der metallischen Verbindung kann nämlich die in der Laufschicht durch Reibung entstehende Wärme optimal zum Träger hin abgeführt werden. Im Übrigen wird durch die offene Struktur des Verstärkungsmaterials, wenn diese mit POLYETHYLEN durchsetzt ist, die Festigkeit und damit die Belastbarkeit der Laufschicht zusätzlich erhöht, was die Anwendung von Polyethylen als Laufschichtmaterial unterstützt. Was die mechanische Belastbarkeit und Temperaturbeständigkeit angeht, ist Polyethylen also im Fall der Verwendung einer metallischen Verbindung zwischen Träger und Verstärkungsmaterial eine gleichwertige Alternative zu den bisher verwendeten Kunststoffen.

Der entscheidende Vorteil ist jedoch im Fall der Verwendung von Polyethylen die kostengünstige Herstellung und die gute Umweltverträglichkeit. Da es sich bei einem Gleitlager um ein häufig verwendetes und weit verbreitetes Produkt handelt, ist besonders der Umweltaspekt sehr wesentlich. So lassen sich Polyethylen-Abfälle ohne Umweltbelastung verbrennen, da nur Kohlendioxid, Kohlenmonoxid, Wasser und Stickoxide entstehen. Polyethylen ist also ein Kunststoff, der in Bezug auf Toxikologie und Umweltbelastung bei der Produktion, Verbrennung und Deponierung wesentlich weniger Probleme bereitet als z.B. PTFE. ultrahochmolekularem Polyethylen (UHMW-PE) oder Polyethylen-Compounds ist.

HMW-PE bzw. UHMW-PE zeichnen sich durch ihre hohe bzw. ultrahohe Molmasse von 200.000 bis 5.000.000 g/Mol bzw. 3.000.000 bis 6.000.000 g/Mol aus. Es handelt sich dabei um ein besonders steifes und hartes Polyethylen, das gute Gleit- und Verschleißeigenschaften besitzt.

Daneben kann die Laufschicht noch übliche Zusatzstoffe wie Füllstoffe (z.B. Glasfasern, Kohle, Graphit und/oder aromatische Polyester) enthalten. Kunststoff-Zusammensetzungen auf Basis von Polyethylen, die neben Polyethylen noch Füllstoffe wie Glasfasern, Kohle, Graphit und/oder aromatische Polyester enthalten, bezeichnet man auch als Polyethylen-Compounds (PE-Compounds).

Denkbar als Kunststoffzusammensetzung für die Laufschicht sind auch Mischungen der oben genannten Polyethylene und/oder Mischungen von Polyethylenen mit anderen Polymeren, insbesondere mit Fluorpolymeren wie PTFE, PFA, MFA und/oder FEP. Auch Mischungen mit Polyether-Etherketon (PEEK) sind denkbar. Denkbar sind insbesondere Mischungen, die aus 10 bis 99,9 Gew.% , insbesondere 40 bis 99,9 Gew.% und besonders bevorzugt 80 bis 99,9 Gew.% Polyethylen und im Rest aus Fluorpolymeren oder Polyether-Keton, gegebenenfalls neben üblichen Additiven, Polymeren, insbesondere mit Fluorpolymeren wie PTFE, PFA, MFA und/oder FEP. Auch Mischungen mit Polyether-Etherketon (PEEK) sind denkbar. Denkbar sind insbesondere Mischungen, die aus 10 bis 99,9 Gew.% , insbesondere 40 bis 99,9 Gew.% und besonders bevorzugt 80 bis 99,9 Gew.% Polyethylen und im Rest aus Fluorpolymeren oder Polyether-Keton, gegebenenfalls neben üblichen Additiven, Zusatzstoffen und Füllstoffen (z.B. Glasfaser, Kohle, Graphit und/oder aromatische Polyester), bestehen.

Denkbar als Kunststoff-Zusammensetzung für die Laufschicht sind ferner auch Polymerlegierungen enthaltend Polyethylen.

Besonders vorteilhaft ist ferner, wenn das Material der Laufschicht zumindest teilweise die Öffnungen des Verstärkungsmaterials ausfüllt. Auf diese Weise ist die Laufschicht noch widerstandsfähiger und reißfester. Die Laufschicht sollte, gemessen oberhalb des Verstärkungsmaterials, eine Dicke von 1 µm bis 1,5 mm, insbesondere 5 bis 250 µm, aufweisen.

Eine gute Festigkeit bei gleichzeitig optimalen Wärmeübertragungseigenschaften wird erreicht, wenn der Metallträger und das Verstärkungsmaterial durch Sintern, Schweißen, Löten und/oder Galvanisieren miteinander verbunden sind. Vorzugsweise erfolgt die Verbindung durch Sintern.

Der metallische Träger kann aus beliebigen Metallen, insbesondere aus Stahl, Edelstahl, Aluminium, Bronze, Messing, Titan und/oder Kupfer oder einer Legierung davon, bestehen und eine beliebig Dicke, insbesondere eine Dicke von 0,05 bis 10 mm, aufweisen. Vorzugsweise liegt die Dicke in einem Bereich zwischen 0,2 und 3 mm.

Das Verstärkungsmaterial mit offener Struktur ist vorzugsweise ein Gewebe, insbesondere ein Drahtgewebe, ein Streckmetall, ein Vlies, insbesondere ein Metallvlies, ein Metallschaum und/oder ein Lochblech. Vorzugsweise wird ein Metallgewebe eingesetzt. Das Verstärkungsmaterial kann aus Metall, insbesondere aus Bronze, Kupfer, Silber, Chrom, Nickel, Zink, Zink-EisenLegierung, Zink-Nickel-Legierung und/oder Aluminium oder einer Legierung davon, bestehen. Vorzugsweise wird ein Bronze-Gewebe eingesetzt. Auch Mischgewebe aus verschiedenen Metallen, insbesondere Mischgewebe aus den vorgenannten Metallen, sind denkbar. Die Dicke des Verstärkungsmaterials liegt bevorzugt in einem Bereich von 0,1 bis 6 mm, insbesondere von 0,1 bis 2 mm, liegen.

Zwischen metallischem Träger und Verstärkungsmaterial können eine oder mehrere Zwischenschichten, insbesondere metallische Zwischenschichten, angeordnet sein. Die metallische Zwischenschicht besteht vorzugsweise aus demselben Material wie das metallische Verstärkungsmaterial mit offener Struktur. Besonders geeignete Materialien für die Zwischenschicht(en) sind Kupfer und/oder Bronze. Die metallische Zwischenschicht kann durch Galvanisieren und/oder Plattieren auf den Träger oder das Verstärkungsmaterial aufgebracht werden. Die Zwischenschicht kann eine Dicke von 1 bis 100 µm aufweisen.

Das erfindungsgemäße Verbundmaterial eignet sich zur Verwendung als Trägermaterial eines Gleitlagers, insbesondere eines wartungsfreien Gleitlagers. Die Erfindung umfaßt demgemäß auch Gleitlager, die das erfindungsgemäße Verbundmaterial enthalten.

Schließlich umfaßt die Erfindung ein entsprechendes Verfahren zur Herstellung eines Verbundmaterials mit einem oder mehreren der zuvor beschriebenen Merkmale. Bei diesem Verfahren erfolgt die Herstellung der metallischen Verbindung zwischen Träger und Verstärkungsmaterial durch Sintern, Schweißen, Löten und/oder Galvanisieren. Die Zwischenschicht kann durch Plattieren und/oder Galvanisieren aufgebracht werden. Die Laufschicht wird vorteilhafterweise durch Kalandern, Lackieren und/oder Laminieren in das Verstärkungsmaterial eingebracht.

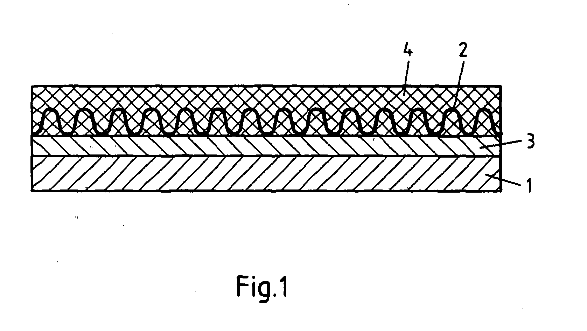

Nachfolgend wird die Erfindung anhand eines in Fig. 1 dargestellten Ausführungsbeispiels näher erläutert.

Fig. 1 zeigt ein erfindungsgemäßes Verbundmaterial, umfassend einen metallischen Träger 1, eine metallische Zwischenschicht 3, ein Drahtgewebe als Verstärkungsmaterial 2 und schließlich eine Laufschicht 4. Der metallische Träger 1 besteht vorzugsweise aus Stahl. Die metallische Zwischenschicht 3, die vorzugsweise aus Kupfer oder Bronze besteht, ist beispielsweise durch Plattieren oder galvanisch auf den Träger 1 aufgebracht worden. Das als Verstärkungsmaterial 2 dienende Drahtgewebe besteht aus Bronze oder Kupfer und wurde durch Sintern aufgebracht. Auf das Verstärkungsmaterial 2 ist beispielsweise durch Einkalandern oder Auflaminieren eine Laufschicht aus Polyethylen aufgebracht, die auch die Öffnungen des Verstärkungsmaterials 2 ausfüllt. Ein derartiges Verbundmaterial eignet sich nach entsprechende Formung hervorragend zum Einsatz als Trägermaterial in Gleitlagern.

Wird das Verstärkungsmaterial 2 durch Sintern mit der darunterliegenden Metallschicht 1,3 verbunden, so wird eine gute Tragfähigkeit des Lagers erreicht. In den folgenden Tabellen sind einige Druckversuche mit versintertem Bz-(CuSn6-)Gewebe mit einer Batchpresse (Druck 4,1 Mpa, 380°C, 2 min. Haltezeit, Abkühlen bis 40°C) dargestellt. Bei den Versuchen 3.3 und 3.4 wurde sowohl feines Gewebe (Weite 0,112 mm, Drahtdurchmesser 0,08 mm) als auch grobes Gewebe (Weite 0,4 mm, Drahtdurchmesser 0,25 mm) verwendet.

**Tabelle 1**

| **Versuch** | **Materialaufbau** | **Dicke** | **Größe** | **Pressdruck [bar]** | **Laminatdicke [mm]** | **statischer Druckversuch** |
|---|---|---|---|---|---|---|
| | | **[mm]** | **[cm²]** | | | **[N/mm²]** |
| 2.1 | grobes Gewebe Bz-Plattierung (kalandert) | 0,676 | 13,17 x 2,56 | 7 | 0,705 | 200-220 |
| 2,2 | grobes Gewebe Bz-Plattierung (nicht kalandert) | 0,936 | 10,11 x 2,56 | 6 | 0,934 | 100-150 |
| 3.3 | feines Gewebe grobes Gewebe Bz-Plattierung | 0,995 | 11,67 x 2,53 | 7 | 1,008 | |
| 3.4 | grobes Gewebe fines Gewebe Bz-Plattierung | 1,011 | 14,91 x 2,54 | 8 | 1,007 | |
| 3.6 | grobes Gewebe blankes Blech | 0,891 | 9,38 x 2,51 | 6 | 0,887 | |

**Tabelle 2**

| **Versuch** | **Ergebnis** |
|---|---|
| 2.1 | Entstehung von Sinterlinien und Kavitäten mit Hinterschneidungen |
| 2.2 | Entstehung von Sinterpunkten und einer höhlenartigen Struktur mit vielen Verankerungsmöglichkeiten |
| 3.3 | Entstehung von Sinterpunkten und einer höhlenartigen Struktur mit vielen Verankerungsmöglichkeiten |
| 3.4 | Entstehung von Sinterpunkten und einer höhlenartigen Struktur mit vielen Verankerungsmöglichkeiten |
| 3.6 | Entstehung von Sinterpunkten und einer höhlenartigen Struktur mit vielen Verankerungsmöglichkeiten |

Die zuvor beschriebenen Ausführungsbeispiele haben lediglich erläuternde Funktion und die Erfindung ist nicht auf die Ausführungsbeispiele beschränkt. Vielmehr ist der Schutzumfang der Erfindung durch die nachfolgenden Patentansprüche und deren rechtlichen Äquivalente definiert.

### Bezugszeichenliste

- 1 -: metallischer Träger
- 2 -: Verstärkungsmaterial
- 3 -: metallische Zwischenschicht
- 4 -: Laufschicht

## Patentansprüche

1. Verbundmaterial zum Einsatz in Gleitlagern, umfassend einen metallischen Träger (1) und mindestens ein Verstärkungsmaterial mit offener Struktur (2), wobei der Träger (1) und das Verstärkungsmaterial (2) durch eine metallische Verbindung miteinander verbunden sind und wobei auf dem Verstärkungsmaterial (2) als weitere Schicht eine Laufschicht (4) vorgesehen ist, **dadurch gekennzeichnet, dass** die Laufschicht (4) Polyethylen (PE)in einer Menge von 90 bis 100 Gew.% enthält.

2. Verbundmaterial nach Anspruch 1, **dadurch gekennzeichnet, dass** die Laufschicht (4) hochmolekulares Polyethylen, ultrahochmolekulares Polyethylen und/oder Polyethylen-Compounds enthält.

3. Verbundmaterial nach Anspruch 1 oder 2, **dadurch gekennzeichnet, dass** das Material der Laufschicht (4) zumindest teilweise die Öffnungen des Verstärkungsmaterials (2) ausfüllt.

4. Verbundmaterial nach einem der vorangegangenen Ansprüche, **dadurch gekennzeichnet, dass** die Laufschicht (4), gemessen oberhalb des Verstärkungsmaterials (2), eine Dicke von 5 µm bis 1,5 mm, insbesondere 100 bis 300 µm, aufweist.

5. Verbundmaterial nach einem der vorangegangenen Ansprüche, **dadurch gekennzeichnet, dass** der Träger (1) und das Verstärkungsmaterial (2) durch Sintern, Schweißen, Löten und/oder Galvanisieren miteinander verbunden sind.

6. Verbundmaterial nach einem der vorangegangenen Ansprüche, **dadurch gekennzeichnet, dass** der Träger (1) ein Träger aus Stahl, Edelstahl, Aluminium, Bronze, Messing, Titan und/oder Kupfer oder einer Legierung davon ist.

7. Verbundmaterial nach einem der vorangegangenen Ansprüche, **dadurch gekennzeichnet, dass** der Träger (1) eine Dicke von 0,05 bis 10 mm, insbesondere 0,2 bis 3 mm, aufweist.

8. Verbundmaterial nach einem der vorangegangenen Ansprüche, **dadurch gekennzeichnet, dass** das Verstärkungsmaterial mit offener Struktur (2) ein Gewebe, insbesondere ein Drahtgewebe, ein Streckmetall, ein Vlies, insbesondere ein Metallvlies, ein Metallschaum und/oder ein Lochblech ist.

9. Verbundmaterial nach einem der vorangegangenen Ansprüche, **dadurch gekennzeichnet, dass** das Verstärkungsmaterial (2) aus Metall, insbesondere aus Bronze, Kupfer, Chrom, Nickel, Zink, einer Zink-Eisen-Legierung, einer Zink-Nickel-Legierung und/oder Aluminium oder einer Legierung davon, besteht.

10. Verbundmaterial nach einem der vorangegangenen Ansprüche, **dadurch gekennzeichnet, dass** das Verstärkungsmaterial (2) eine Dicke von 0,1 bis 6 mm, insbesondere 0,2 bis 2 mm, aufweist.

11. Verbundmaterial nach einem der vorangegangenen Ansprüche, **dadurch gekennzeichnet, dass** zwischen Träger (1) und Verstärkungsmaterial (2) als weitere Schicht eine metallische Zwischenschicht (3) vorgesehen ist.

12. Verbundmaterial nach Anspruch 11, **dadurch gekennzeichnet, dass** die Zwischenschicht (3) durch Galvanisieren und/oder Plattieren auf den Träger (1) oder das Verstärkungsmaterial (2) aufgebracht ist.

13. Verbundmaterial nach Anspruch 11 oder 12, **dadurch gekennzeichnet, dass** die Zwischenschicht (3) aus mindestens einem der in Anspruch 9 genannten Materialien besteht.

14. Verbundmaterial nach einem der Ansprüche 11 bis 13, **dadurch gekennzeichnet, dass** die Zwischenschicht (3) eine Dicke von 1 bis 100 µm aufweist.

15. Gleitlagerbuchse, enthaltend ein Verbundmaterials nach einem der Ansprüche 1 bis 14.

16. Verwendung eines Verbundmaterials nach einem der Ansprüche 1 bis 14 zum Einsatz in Gleitlagern.

17. Verfahren zur Herstellung des Verbundmaterials nach einem der Ansprüche 1 bis 14, worin die Herstellung der metallischen Verbindung zwischen Träger (1) und Verstärkungsmaterial (2) durch Sintern, Schweißen, Löten und/oder Galvanisieren erfolgt.

18. Verfahren nach Anspruch 17, worin das Aufbringen der Zwischenschicht (3) durch Plattieren und/oder Galvanisieren erfolgt.

19. Verfahren nach Anspruch 17 oder 18, worin die Laufschicht (4) durch Kalandern, Lackieren und/oder Laminieren in das Verstärkungsmaterial (2) eingebracht wird.

## Claims

1. A composite material for use in sliding bearings, comprising a metal support (1) and at least one reinforcing material with an open structure (2), wherein the support (1) and the reinforcing material (2) are connected to each other by a metal connection and wherein a sliding layer (4) is provided on the reinforcing material (2) as a further layer, **characterised in that** the sliding layer (4) contains polyethylene (PE) in a quantity of 90 to 100% by weight.

2. The composite material according to Claim 1, **characterised in that** the sliding layer (4) contains high molecular polyethylene, ultra high molecular polyethylene and/or polyethylene compounds.

3. The composite material according to Claim 1 or 2, **characterised in that** the material of the sliding layer (4) at least partially fills the openings of the reinforcing material (2).

4. The composite material according to one of the preceding claims, **characterised in that** the sliding layer (4) has a thickness of 5 µm to 1.5 mm, in particular 100 to 300 µm, measured above the reinforcing material (2).

5. The composite material according to one of the preceding claims, **characterised in that** the support (1) and the reinforcing material (2) are connected to each other by sintering, welding, soldering and/or galvanising.

6. The composite material according to one of the preceding claims, **characterised in that** the support (1) is a support consisting of a steel, stainless steel, aluminium, bronze, brass, titanium and/or copper or an alloy thereof.

7. The composite material according to one of the preceding claims, **characterised in that** the support (1) has a thickness of 0.05 to 10 mm, in particular 0.2 to 3 mm.

8. The composite material according to one of the preceding claims, **characterised in that** the reinforcing material with an open structure (2) is a fabric, in particular a wire fabric, an expanded metal, a non-woven fabric, in particular a metal non-woven fabric, a metal foam and/or a perforated plate.

9. The composite material according to one of the preceding claims, **characterised in that** the reinforcing material (2) consists of metal, in particular bronze, copper, chromium, nickel, zinc, a zinc-iron alloy, a zinc-nickel alloy and/or aluminium or an alloy thereof.

10. The composite material according to one of the preceding claims, **characterised in that** the reinforcing material (2) has a thickness of 0.1 to 6 mm, in particular 0.2 to 2 mm.

11. The composite material according to one of the preceding claims, **characterised in that** a metal intermediate layer (3) is provided between the support (1) and reinforcing material (2) as a further layer.

12. The composite material according to Claim 11, **characterised in that** the intermediate layer (3) is applied to the support (1) or the reinforcing material (2) by galvanising and/or plating.

13. The composite material according to Claim 11 or 12, **characterised in that** the intermediate layer (3) consists of at least one of the materials mentioned in Claim 9.

14. The composite material according to one of Claims 11 to 13, **characterised in that** the intermediate layer (3) has a thickness of 1 to 100 µm.

15. A sliding bearing bush containing a composite material according to one of Claims 1 to 14.

16. Use of a composite material according to one of Claims 1 to 14 for use in sliding bearings.

17. A method for producing the composite material according to one of Claims 1 to 14, in which the metal connection between the support (1) and reinforcing material (2) is produced by sintering, welding, soldering and/or galvanising.

18. The method according to Claim 17, in which the intermediate layer (3) is applied by plating and/or galvanising.

19. The method according to Claim 17 or 18, in which the sliding layer (4) is inserted in the reinforcing material (2) by calandering, varnishing and/or laminating.

## Revendications

1. Matériau composite pour mise en oeuvre dans un palier à glissement, comprenant un support métallique (1) et au moins un matériau de renforcement avec structure ouverte (2), où le support (1) et le matériau de renforcement (2) sont liés l'un à l'autre par une liaison métallique, et où sur le matériau de renforcement (2), comme autre couche, est prévue une couche de roulement (4), **caractérisé en ce que** la couche de roulement (4) contient du polyéthylène (PE) en une quantité allant de 90 à 100% en poids.

2. Matériau composite selon la revendication 1, **caractérisé en ce que** la couche de roulement (4) contient du polyéthylène de poids moléculaire élevé, du polyéthylène de poids moléculaire ultra-élevé et/ou des compounds de polyéthylène.

3. Matériau composite selon la revendication 1 ou 2, **caractérisé en ce que** le matériau de la couche de roulement (4) remplit au moins partiellement les ouvertures du matériau de renforcement.

4. Matériau composite selon l'une des revendications précédentes, **caractérisé en ce que** la couche de roulement (4), mesurée au-dessus du matériau de renforcement (2), présente une épaisseur allant de 5 µm à 1,5 mm, en particulier de 100 à 300 µm.

5. Matériau composite selon l'une des revendications précédentes, **caractérisé en ce que** le support (1) et le matériau de renforcement (2) sont reliés l'un à l'autre, par frittage, soudage, brasage et/ou galvanisation.

6. Matériau composite selon l'une des revendications précédentes, **caractérisé en ce que** le support (1) est un support en acier, acier spécial, aluminium, bronze, laiton, titane et/ou cuivre ou un alliage de ceux-ci.

7. Matériau composite selon l'une des revendications précédentes, **caractérisé en ce que** le support (1) présente une épaisseur allant de 0,05 à 10 mm, en particulier de 0,2 à 3 mm.

8. Matériau composite selon l'une des revendications précédentes, **caractérisé en ce que** le matériau de renforcement avec structure ouverte (2) est un tissu, en particulier un tissu métallique, un métal déployé, un voile, en particulier un voile métallique, une mousse métallique et/ou une tôle perforée.

9. Matériau composite selon l'une des revendications précédentes, **caractérisé en ce que** le matériau de renforcement (2) consiste en un métal, en particulier le bronze, le cuivre, le chrome, le nickel, le zinc, un alliage zinc-fer, un alliage zinc-nickel et/ou l'aluminium ou un alliage de ceux-ci.

10. Matériau composite selon l'une des revendications précédentes, **caractérisé en ce que** le matériau de renforcement (2) présente une épaisseur allant de 0,1 à 6 mm, en particulier de 0,2 à 2 mm.

11. Matériau composite selon l'une des revendications précédentes, **caractérisé en ce qu'**entre le support (1) et le matériau de renforcement (2), est prévue une couche métallique intermédiaire (3) comme autre couche.

12. Matériau composite selon la revendication 11, **caractérisé en ce que** la couche intermédiaire (3) est appliquée sur le support (1) ou le matériau de renforcement (2), par galvanisation et/ou placage.

13. Matériau composite selon la revendication 11 ou 12, **caractérisé en ce que** la couche intermédiaire (3) consiste en au moins un des matériaux cités à la revendication 9.

14. Matériau composite selon l'une des revendications 11 à 13, **caractérisé en ce que** la couche intermédiaire (3) présente une épaisseur allant de 1 à 100 µm.

15. Pont de palier à glissement, contenant un matériau composite selon l'une quelconque des revendications 1 à 14.

16. Utilisation d'un matériau composite selon l'une quelconque des revendications 1 à 14, pour mise en oeuvre dans un palier à glissement.

17. Procédé de préparation du matériau composite selon l'une quelconque des revendications 1 à 14, où la préparation de la liaison métallique entre le support (1) et le matériau de renforcement (2) est réalisée par frittage, soudage, brasage et/ou galvanisation.

18. Procédé selon la revendication 17, où l'application de la couche intermédiaire (3) est réalisée par placage et/ou galvanisation.

19. Procédé selon la revendication 17 ou 18, où la couche de roulement (4) est introduite par calandrage, laquage et/ou stratification dans le matériau de renforcement (2).
